# EUROPEAN PATENT SPECIFICATION

(11) **EP 3 822 307 B1**
(45) Date of publication and mention of the grant of the patent: **14.09.2022**
(21) Application number: 19880675.4
(22) Date of filing: 28.10.2019
(51) Int. Cl.: C09J 7/29, C09J 7/35, C09J 123/08, C09J 175/04, B32B 37/12, C09J 177/06

(54) **BREATHABLE WATERPROOF MEMBRANE CAPABLE OF BEING HEAT-BONDED, AND METHOD FOR MANUFACTURING SAME**
ATMUNGSAKTIVE WASSERDICHTE MEMBRAN, DIE HEISSVERBUNDEN WERDEN KANN, UND VERFAHREN ZU IHRER HERSTELLUNG
MEMBRANE IMPERMÉABLE À L'EAU ET RESPIRANTE POUVANT ÊTRE THERMOCOLLÉE, ET SON PROCÉDÉ DE FABRICATION

(30) Priority: 31.10.2018 KR 20180131968
(43) Date of publication of application: 19.05.2021
(73) Proprietor: Sealon Co., Ltd., Seoul 08389 (KR); Bristex Co., Ltd., Seoul 08389 (KR)
(72) Inventor: CHANG, Keun Hun, Seoul 08563 (KR); CHA, Jin Seoup, Seoul 07003 (KR)
(74) Representative: Meroni, Francesca
(86) International application number: PCT/KR2019/014291
(87) International publication number: WO 2020/091349

(56) References cited:
- WO-A2-2009/002384
- JP-A- H11 107 170
- JP-A- 2014 015 582
- KR-A- 20070 109 001
- KR-A- 20160 072 086
- KR-A- 20170 108 558
- US-A1- 2017 266 919
- DATABASE WPI Week 201717 Thomson Scientific, London, GB; AN 2017-107447 XP002803839, & KR 101 702 124 B1 (UPC UNION POLYMER CHEM JH) 2 February 2017 (2017-02-02)

## Description

### TECHNICAL FIELD

The present invention relates to a breathable waterproof membrane used in preparation of a functional fabric for outdoor use and a method of preparing the same, and more particularly, to a thermally-bondable, breathable waterproof membrane and a method of preparing the same, the membrane being attached to a fabric substrate such as a woven fabric by applying heat and pressure on one side of the fabric substrate, thereby having excellent breathability and waterproofing properties and allowing a simple manufacture of a functional fabric for outdoor clothing.

### BACKGROUND ART

Generally, breathable waterproof fabrics refer to fabric materials that allow water vapor such as sweat inside the clothing to pass through to the outside and block moisture such as rain from the outside not to seep into the clothing, and thus the fabrics are prepared not to be wet by rain or snow (waterproof) and to discharge sweat (breathable) to help controlling body temperature and maintaining comfortable feeling of the wearer.

The breathable waterproof fabric has a dense structure and flexible pores which allows the fabric to have a windproof function as well. When the wearer is sweating due to increased activity in cold environments, the fabric serves as a medium controlling the transfer of heat and moisture between the human body and the environment, and thus prevents condensation of the sweat or decrease in the body temperature.

In recent years, with increasing interest in health and leisure activities, the breathable waterproof fabric has been applied to various fields, and these functionalities have been further emphasized in line with the boom for luxury and well-being. In addition, the breathable waterproof fabric has been widely used in outdoor clothing, mountaineering clothing, outdoor wear, and sleeping bags.

Also, with the introduction of a 52-hour work per week, the leisure time has increased, and the lifestyle that emphasizes a comfortable and relaxed life has become a trend, and thus outdoor clothing industries have posted high sales growth every year.

Techniques for manufacturing the breathable waterproof fabric may be a wet method, a dry method, and a laminating method, and the laminating method prepares a breathable waterproof fabric by separately preparing a membrane having a breathable waterproof property and then bonding the membrane with a fabric using an adhesive.

The prior arts of a membrane for preparing a breathable waterproof fabric using the laminating method may include Korean Patent Publication No. 2017-0127760 (November 22, 2017), which discloses a unidirectional breathable waterproof multilayer membrane and a method of preparing the same, the membrane including a first porous layer including first nanofibers formed of a hydrophobic polymer; a nonporous layer; and a second porous layer including second nanofibers containing or coated with an absorptive material, and Korean Patent Publication No. 2010-0126940 (December 3, 2010), which discloses a breathable waterproof membrane with excellent breathability and moisture permeability and a process for preparing the same, the method including laminating polyurethane beads in the cross-linked state on a releasing paper and forming a number of fine pores between the polyurethane beads to prepare the membrane. Also, Korean Patent Publication No. 2017-0068984 (June 20, 2017) discloses a breathable waterproof fabric and a preparing method therefor, the fabric including a fabric substrate; a surface-modified layer formed on a bonding surface of the fabric substrate; a dot adhesive member transferred to the surface-modified layer; and a membrane bonded to the fabric substrate by the dot adhesive member. WO2009/002384 discloses also a multilayer breathable waterproof membrane.

However, the membranes for preparing a breathable waterproof fabric according to the prior arts may result in uneven coating distribution of a liquid adhesive when bonding the membrane to a fabric, and this may cause problems such as uneven breathing efficiency and degrading breathability as the liquid adhesive seeps into the fabric. In addition, the membrane attached to the fabric substrate may be poor in peeling durability or abrasion durability, and as a surface of the breathable waterproof membrane contacts moisture such as sweat, a swelling phenomenon in which a volume of the surface of the membrane expands, may occur, which may result in poor appearance of clothing.

### DETAILED DESCRIPTION OF INVENTION

### TECHNICAL PROBLEM

Provided are a breathable waterproof membrane 100 capable of being thermally-bonded to a fabric substrate 15 using a hot-melt adhesive that is dot-coated on the surface thereof, and a method of preparing the breathable waterproof membrane 100. Provided are a thermally-bondable, breathable waterproof membrane 100 and a method of preparing the same, the membrane 100 being applied to the preparation of outdoor clothing, thereby capable of giving excellent breathability and waterproof properties to the outdoor clothing and simplifying a manufacturing process of the outdoor clothing. However, the technical problems to be resolved by the present invention are not limited to the above-described problems, and other problems which not described above may be clearly understood by those skilled in the art through the following description.

### SOLUTION TO PROBLEM

According to an aspect of the present invention, a thermally-bondable, breathable waterproof membrane 100 includes a membrane layer 50; a release layer 70 formed on a first side of the membrane layer 50; a base layer 25 transferred in the form of dots on a second side of the membrane layer 50, wherein the first side and the second side of the membrane layer 50 are opposite to each other; and a hot-melt adhesive layer 30 formed on the base layer 25, wherein the base layer 25 and the hot-melt adhesive layer 30 are attached to each other to form a double dot layer 60. Also, a moisture permeability of the thermally-bondable, breathable waterproof membrane 100 may be in a range of 1,000 g/m2/24h to 50,000 g/m2/24h, and a protective layer 10 may be preferably formed on the membrane layer 50.

The hot-melt adhesive layer 30 may be preferably formed of one selected from a polyamide-based resin, a polyurethane-based resin, an ethylene vinyl acetate (EVA) resin, and a polyester-based resin, the base layer 25 may be preferably formed of one selected from an acryl-based resin, a polyurethane-based resin, a polyamide-based resin, a polyester-based resin, a polyolefin-based resin, a PVC resin, and an EVA resin; and the membrane layer 50 may be preferably formed of one selected from a polyurethane, a polyester, a polyamide, and polytetrafluoroethylene.

The dots of the base layer 25 may be preferably transferred in the form of dots at a density in a range of 1 dot/cm² to 220 dots/cm² on the membrane layer 50, and a thickness of the membrane layer 50 may be preferably in a range of 0.15 mm to 0.30 mm.

Also, the thermally-bondable, breathable waterproof membrane 100 for preparing a breathable waterproof fabric may be thermally-bonded with a fabric substrate 15 to prepare a breathable waterproof fabric.

According to another aspect of the present invention, a method of preparing a thermally-bondable, breathable waterproof membrane 100 may include a first step of preparing a membrane layer 50 with a release layer 70 formed on a first side of the membrane layer; a second step of transferring a base layer 25 in the form of dots on a second side of the membrane layer 50, wherein the first side and the second side of the membrane layer 50 are opposite to each other; a third step of scattering hot-melt adhesive powders 35 on the base layer 25; a fourth step of removing by suction the hot-melt adhesive powders 35 other than the hot-melt adhesive powders 35 settled on the base layer 25; a fifth step of heat-fixing the hot-melt adhesive powders 35 settled on the base layer 25 to form a hot-melt adhesive layer 30; and a sixth step of cooling the base layer 25 and the hot-melt adhesive layer 30. In particular, the method may preferably include adding a protective layer 10 on the membrane layer 50.

### ADVANTAGEOUS EFFECTS OF INVENTION

According to the present invention, a thermally-bondable, breathable waterproof membrane 100 may be thermally-bonded to a fabric substrate 15 for preparing clothing using a flat press or a roll press and thus facilitates preparation of a functional fabric having a breathable waterproof property. Also, when the membrane 100 is used, a breathable waterproof functional fabric may be prepared by a laminating process, which reduces steps of a sewing process for preparing outdoor clothing, and thus price competitiveness of the final product may increase. In addition, the thermally-bondable, breathable waterproof membrane 100 according to the present invention does not use a solvent, which makes the method eco-friendly compared to a conventional method that applies an adhesive on a fabric and then attaches a membrane to the fabric by bonding the membrane and the fabric, and increases the design completeness of outdoor clothing.

### BRIEF DESCRIPTION OF DRAWINGS

FIG. 1 is a cross-sectional view of a thermally-bondable, breathable waterproof membrane 100 according to a first embodiment of the present invention;
FIG. 2 is a cross-sectional view of a thermally-bondable, breathable waterproof membrane 100 according to a second embodiment of the present invention;
FIG. 3 is a cross-sectional schematic view of a breathable waterproof fabric to which the thermally-bondable, breathable waterproof membrane 100 according to the second embodiment of the present invention is applied;
FIG. 4 is a top view of a thermally-bondable, breathable waterproof membrane 100 according to an embodiment of the present invention;
FIG. 5 is a preparing process diagram of the thermally-bondable, breathable waterproof membrane 100 according to an embodiment of the present invention; and
FIG. 6 is a schematic view of an upper screen roll 100 used in a coating process of a base resin according to an embodiment of the present invention.

### BEST MODE

It will be understood that the terms "include," "comprise," or "have" when used in this specification, specify the presence of stated features, numbers, steps, elements, components, or combinations thereof but do not preclude possibility of the presence or addition of one or more other features, numbers, steps, operations, elements, components, or combinations thereof.

Unless otherwise defined, all terms including technical and scientific terms used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

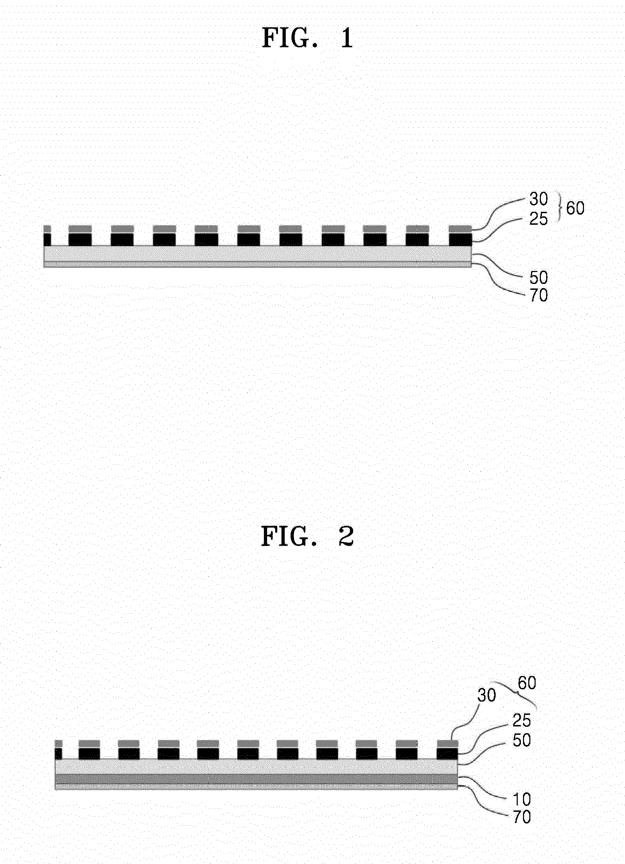

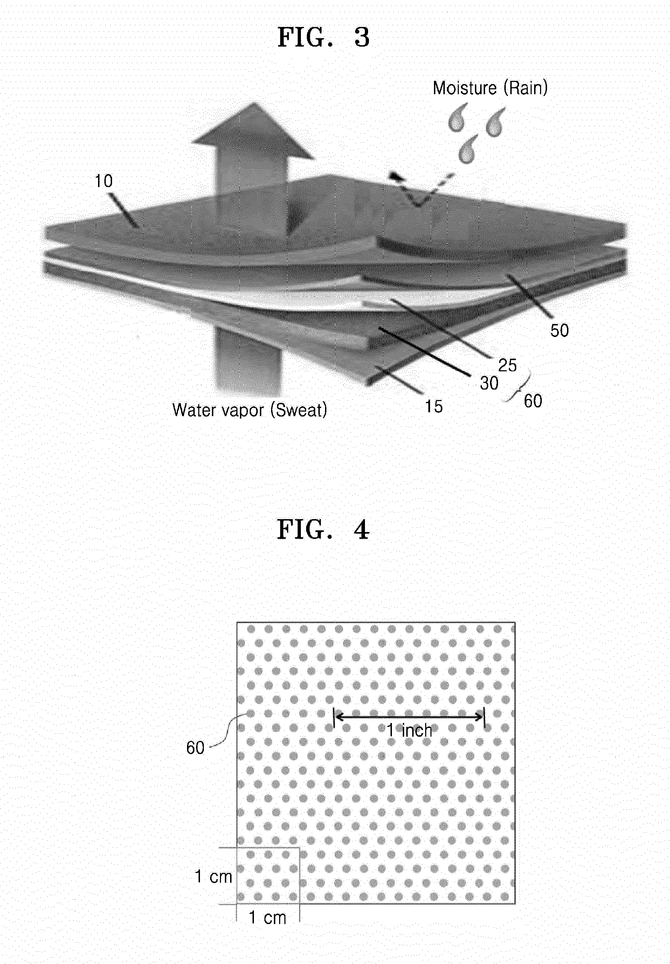

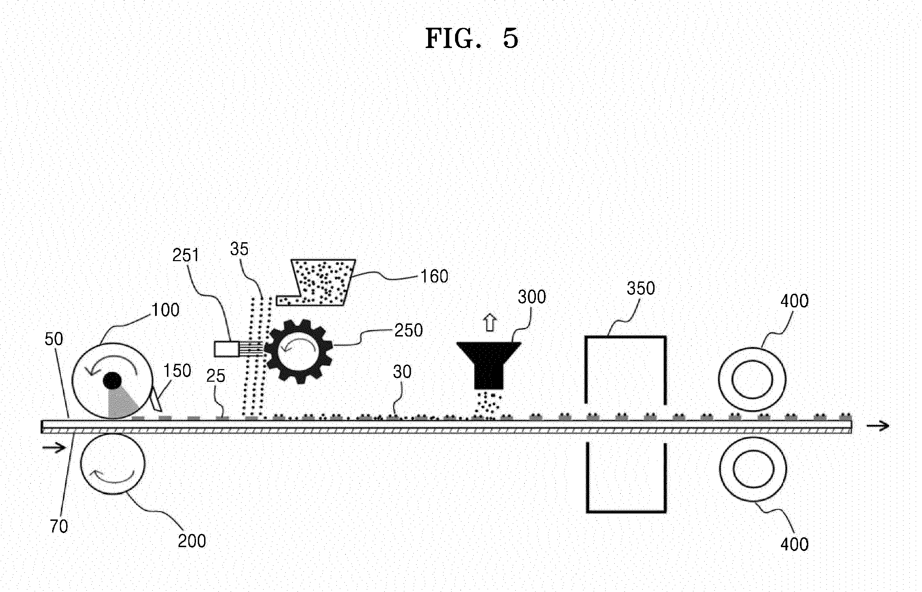

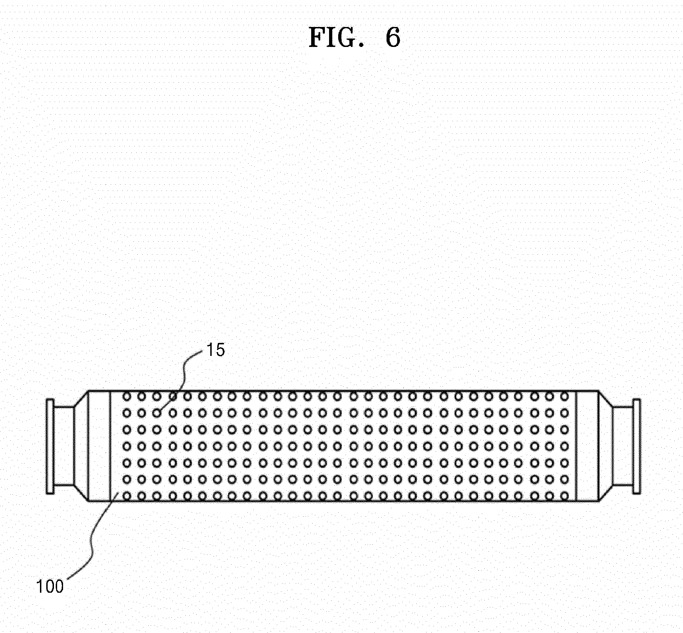

Hereinafter, a thermally-bondable, breathable waterproof membrane 100 and a method of preparing the membrane 100 according to the present invention will be described in detail with reference to the accompanying drawings. FIG. 1 is a cross-sectional view of a thermally-bondable, breathable waterproof membrane 100 according to a first embodiment of the present invention, FIG. 2 is a cross-sectional view of a thermally-bondable, breathable waterproof membrane 100 according to a second embodiment of the present invention; FIG. 3 is a cross-sectional schematic view of a breathable waterproof fabric to which the thermally-bondable, breathable waterproof membrane 100 according to the second embodiment of the present invention is applied; FIG. 4 is a top view of a thermally-bondable, breathable waterproof membrane 100 according to an embodiment of the present invention; FIG. 5 is a preparing process diagram of the thermally-bondable, breathable waterproof membrane 100 according to an embodiment of the present invention; and FIG. 6 is a schematic view of an upper screen roll 100 used in a coating process of a base resin according to an embodiment of the present invention.

The thermally-bondable, breathable waterproof membrane 100 according to an embodiment of the present invention provides breathability and waterproofing properties to a fabric substrate 15 by being attached to the fabric substrate 15 during preparation of outdoor clothing, etc. The thermally-bondable, breathable waterproof membrane 100 according to an embodiment of the present invention, as shown in FIG. 1, includes a membrane layer 50; a release layer 70 provided on a first side of the membrane layer 50; a base layer 25 transferred in the form of dots on a second side of the membrane layer 50; and a hot-melt adhesive layer 30 formed on the base layer 25. The hot-melt adhesive layer 30 is formed in the form of dots on the base layer 25 formed in the form of dots to form a double dot layer 60.

That is, according to a first embodiment of the present invention, the membrane layer 50 that forms a basal layer is first needed to prepare the thermally-bondable, breathable waterproof membrane 100 of the present invention. To prepare outdoor clothing, the membrane layer 50 provides breathability and waterproofing properties to the fabric substrate 15 by being attached to the fabric substrate 15.

That is, the membrane layer 50 is a thin film having a microporous structure formed of fine pores and may be prepared using polytetrafluoroethylene, a polyurethane, a polyester, or a polyamide, etc.

That is, polytetrafluoroethylene may uniformly form fine pores in a membrane which may thus exhibit excellent moisture permeability, a polyurethane may facilitate size control of pores formed in a membrane, and a polyester may provide excellent tactile feel and durability at the same time providing excellent moisture permeability and waterproofness, and outstanding appearance. Also, a polyamide has excellent corrosion resistance, abrasion resistance, chemical resistance, and insulating property and thus is widely used in preparation of a breathable waterproof membrane.

In addition, a thickness of the membrane layer 50 used herein is preferably in a range of 0.15 mm to 0.30 mm. When the thickness of the membrane layer 50 is within this range, clothing prepared using the membrane layer 50 may have excellent air permeability and water resistance, and outdoor clothing having excellent windproof and light weight as well as a breathable waterproof property may be prepared. Also, flexibility of the outdoor clothing may not be deteriorated, and thus activities performed while wearing the outdoor clothing may be easy, which allows manufacture of a variety of functional clothing products.

In addition, the thermally-bondable, breathable waterproof membrane 100 of the present invention has a release layer 70 on a first side of the membrane layer 50.

Generally, the release layer 70 is formed of a film, etc. having a so-called release property that does not adhere well to an adhesive component or a pressure sensitive adhesive component. The release layer 70 protects the membrane layer 50 by being attached to the membrane layer 50 and may be used to prevent the membrane layer 50 from contamination by dusts or foreign matters. Also, when the preparation of clothing is completed, the release layer 70 may be easily removed using an easy peel-off property.

In addition, the thermally-bondable, breathable waterproof membrane 100 of the present invention includes a base layer 25 transferred in the form of dots on a second side of the membrane layer 50 which is opposite to the first side of the membrane layer 50. The base layer 25 may preferably be included to prevent attachment of the membrane layer 50 with another fabric and prevent sagging of the membrane layer 50 by gravity during preparation of the thermally-bondable, breathable waterproof membrane 100 of the present invention, and thus processability may be improved and a problem of workability deterioration may be prevented.

The base layer 25 may be formed using one selected from an acrylic-based resin, a polyurethane-based resin, a polyamide-based resin, a polyester-based resin, a polyolefin-based resin, a polyvinylchloride resin, and an ethylene-vinyl acetate copolymer (EVA) resin. In the present invention, the base layer 25 may preferably be transferred in the form of dots on a second side of the membrane layer 50 as shown in FIGS. 1 and 2.

Also, a hot-melt adhesive layer 30 may be formed on the base layer 25. The hot-melt adhesive layer 30 is a part for attaching the membrane layer 50 to the fabric substrate 15 for preparing clothing, wherein, after preparing the thermally-bondable, breathable waterproof membrane 100 of the present invention, the hot-melt adhesive layer 30 may be melted by applying heat to the thermally-bondable, breathable waterproof membrane 100 and then pressed to be thermally-bonded to the fabric substrate 15.

The hot-melt adhesive refer to a heat-melting adhesive that uses a nonvolatile and nonflammable thermoplastic resin in a solid phase at room temperature without using water or a solvent and is melted in a liquid phase by applying heat thereto, and then is applied to a subject to be attached, and then exhibits adhesive strength as the adhesive cools and solidifies.

In the present invention, the base layer 25 and the hot-melt adhesive layer 30 formed on the base layer 25 may form a double dot layer 60 as shown in FIGS. 1 and 2.

A density of the double dot layer 60 formed on the membrane layer 50 of the present invention may be appropriately chosen and implemented.

That is, FIG. 4 is a top view of the thermally-bondable, breathable waterproof membrane 100 of the present invention having the double dot layer 60. As shown in FIG. 4, a formation density of the double dot layer 60 may be represented by the number of dots of the double dot layer 60 formed in 1 cm² of a surface of the thermally-bondable, breathable waterproof membrane 100, i.e., a unit density. In other words, in the present invention, a unit density of the double dot layer 60 may be preferably in a range of 1 dot/cm² to 220 dots/cm².

Also, as shown in FIG. 4, the formation density of the double dot layer 60 may be represented by the number of dots of the double dot layer 60 formed in a line on a 1-inch long line, i.e., a linear density. In the present invention, a linear density of the double dot layer 60 may be preferably in a range of 7 dots to 40 dots.

When the double dot layer 60 is formed within these unit density range and linear density range, a moisture permeability of the thermally-bondable, breathable waterproof membrane 100 of the present invention may be maintained in a range of 1,000 g/m2/24h to 50,000 g/m2/24h, which does not result in significant deterioration of the moisture permeability, and thus the thermally-bondable, breathable waterproof membrane 100 may have an excellent moisture permeability. Also, since the hot-melt adhesive layer 30 has the most excellent adhesive strength, the membrane layer 50 may have excellent peeling durability and abrasion durability.

In addition, according to a second embodiment of the present invention, a protective layer 10 may be added on the membrane layer 50. That is, as shown in FIG. 2, a thermally-bondable, breathable waterproof membrane 100 according to the second embodiment of the present invention may have the protective layer 10 that protects the membrane layer 50 by being formed on a first side of the membrane layer 50. The protective layer 10 may protect the membrane layer 50 by being attached to the membrane layer 50 as shown in FIGS. 2 and 3 and thus may protect fine pores formed in the membrane layer 50 or may be laminated on the membrane layer 50 to enhance a surface strength of the membrane layer 50. The protective layer 10 may be formed of a polyurethane film and may be preferably laminated on the membrane layer 50 as the polyurethane film having a thickness in a range of 1 *µ*m to 2 *µ*m.

The thermally-bondable, breathable waterproof membrane 100 of the present invention prepared as described above is then thermally-bonded to the fabric substrate 15, thereby completing manufacturing a breathable waterproof fabric for preparation of outdoor clothing.

Hereinafter, a method of preparing the thermally-bondable, breathable waterproof membrane 100 of the present invention will be described with reference to FIG. 5.

FIG. 5 is a preparing process diagram that shows preparing processes of the thermally-bondable, breathable waterproof membrane 100 according to the present invention. In the manufacturing process of the thermally-bondable, breathable waterproof membrane 100 according to the present invention, a first step is preparing a membrane layer 50 having a release layer 70 under the membrane layer 50. The membrane layer 50 having the release layer 70 thereunder is inserted between an upper screen roll 100 and a lower roll 200 and transferred in the direction of the arrow.

As a second step, a base layer 25 is formed on a side of the membrane layer 50 which is opposite to the side of the membrane layer 50 having the release layer 70. In the second step, a base resin is first melted and transferred in the form of dots using the rotating upper screen roll 100 to form the base layer 25 on a side of the membrane layer 50 which is opposite to the side of the membrane layer 50 having the release layer 70.

That is, in the second step, after melting the base resin in the upper screen roll 100, the melted base resin may be transferred in the form of dots on the membrane layer 50 for breathability and waterproofing properties through a doctor blade 150 disposed at one side of the upper screen roll 100 to form the base layer 25.

The second step is preferably performed using the upper screen roll 100. In particular, when the base resin is transferred in the form of dots using the upper screen roll 100, the tactile feel and drapability of the membrane layer 50 thus prepared may be excellent.

Also, as shown in FIG. 6, the upper screen roll 100 may preferably have 30 to 180 outlet holes 15 per an area of 1 cm², wherein the base resin is melted and eluted through the outlet holes 15, and a diameter of each of the outlet holes 15 may preferably be in a range of 350 *µ*m to 750 *µ*m.

When the step of forming the base layer 25 is described in further detail, as shown in FIG. 5, the base resin is applied on the membrane layer 50 in the form of dots through the upper screen roll 100, and thus the base layer 25 is formed. Here, an amount of the base resin transferred in the form of dots on the membrane layer 50 may be preferably in a range of 10 g/m² to 30 g/m². When the amount of the base resin applied is greater than 30 g/m², the texture of a fabric may be too hardened, which may degrade the tactile feel of the fabric. When the amount of the base resin applied is less than 10 g/m², the bonding strength may be insufficient, and thus sufficient durability to withstand washing may not be obtained, and as a result, the adhesive strength between the membrane layer 50 and the fabric substrate 15 may decrease.

A transfer rate of the base layer 25 may be most preferably in a range of 20 meters to 30 meters per minute. Also, according to an embodiment of the present invention, a melt viscosity of the base resin may be most preferably in a range of 7,000 cps to 45,000 cps.

The base layer 25 may be formed by melting one base resin selected from an acryl-based resin, a polyurethane, a polyamide, a polyester, a polyolefin, polyvinylchloride (PVC) and an ethylene-vinyl acetate (EVA) copolymer by applying a suitable temperature to the base resin.

Next, a third step is scattering hot-melt adhesive powders 35 on the base layer 25.

The base layer 25 formed in the form of dots in the second step is a melted product that has been produced by applying a suitable temperature to the base resin, where the melted product may be transferred in the form of dots on the membrane layer 50 using the upper screen roll 100. In the third step, before the melted product of the base resin transferred in the form of dots is cooled and solidified, the hot-melt adhesive powders 35 are scattered on the base layer 25.

That is, the hot-melt adhesive powders 35 having a particle size in a range of 80 *µ*m to 200 *µ*m filled in a hopper 160 are supplied to the membrane layer 50 having the base layer 25 formed thereon using a scattering roll 250, and here a vibration brush 251 scatters the hot-melt adhesive powders 35 onto the base layer 25.

Here, the hot-melt adhesive powders 35 are scattered on the membrane layer 50 in the powder form and settled on the base layer 25 that is not yet solidified and thus may form a hot-melt adhesive layer 30 in the form of dots.

Then, the process may undergo a fourth step, in which the hot-melt adhesive powders 35 scattered on the membrane layer 50 other than the hot-melt adhesive powders 35 settled on the base layer 25 are suctioned and removed using a suction device 300.

Since the base resin forming the base layer 25 is in a state before solidification after being transferred on the membrane layer 50 in the form of dots, the hot-melt adhesive powders 35 settled on the base layer 25 are attached on the base layer 25. However, the hot-melt adhesive powders 35 that are not settled on the base layer 25 and fell on the membrane layer 50 are suctioned by the suction device 300 and removed from a surface of the membrane layer 50 in the fourth step.

Subsequently, the process may undergo a fifth step, in which the membrane layer 50, from which the hot-melt adhesive powders 35 not settled on the base layer 25 have been removed, passes through a tenter 350, and thus moisture contained in the double dot layer 60 formed on the membrane layer 50 may be evaporated, and the base layer 25 and the hot-melt adhesive layer 30 formed on the base layer 25 are thermally fixed.

Here, a temperature condition of the tenter 350 may be appropriately set according to the melting temperature of the hot-melt adhesive.

In the fifth step, the hot-melt adhesive powders 35 settled on the base layer 25 form the hot-melt adhesive layer 30 on the base layer 25 in the form of dots at the same time the hot-melt adhesive powders 35 are melt.

Here, the hot-melt adhesive layer 30 formed at a rate of 15 g/m² to 20 g/m² may provide the most excellent adhesive strength after being thermally-bonded to the fabric substrate 15, and this may allow forming the membrane layer 50 with excellent peeling durability and abrasion durability.

After transferring the base layer 25 in the form of dots on the membrane layer 50 as described above, the hot-melt adhesive layer 30 is formed in the form of dots on the base layer 25, thereby completing formation of the double dot layer 60.

Also, after completing the fifth step, the process may undergo a sixth step, in which the double dot layer 60 consisting of the base layer 25 and the hot-melt adhesive layer 30 is cooled. In the sixth step, the double dot layer 60 is cooled using a cooling roll 400, and thus the double dot layer 60 may be taken up thereafter.

Also, according to the second embodiment of the present invention, a step of adding a protective layer 10 on the release layer 70 may further be included in the method.

As described above, the protective layer 10 is formed to enhance strength of a surface of the membrane layer 50 while protecting the membrane layer 50 by being laminated on one side of the release layer 70. The protective layer 10 is formed of a polyurethane film, and a thickness of the polyurethane film may preferably be in a range of 1 *µ*m to 2 *µ*m. The protective layer 10 formed of the polyurethane film may be formed by being laminated between the release layer 70 and the membrane layer 50 using a gravure roll.

The thermally-bondable, breathable waterproof membrane 100 of the present invention prepared through these steps described above may be thermally-bonded to a fabric substrate for manufacturing clothing by applying heat and pressure thereto and thus may prepare a functional fabric having breathability and waterproofing properties. Also, a breathable waterproof functional fabric may be prepared by a laminating process in a sewing process, which reduces steps of preparing outdoor clothing, and thus a price competitiveness of the final product may increase. Also, the thermally-bondable, breathable waterproof membrane 100 of the present invention is eco-friendly and has an effect of increasing the design completeness of outdoor clothing.

While the present invention has been particularly shown and described with reference to exemplary embodiments thereof, it will be understood by those of ordinary skill in the art that various changes in form and details may be made therein without departing from the scope of the present invention. It will also be understood by those skilled in the art that those of ordinary skill in the art may readily understand that various changes and modifications may be made without departing from the spirit or essential characteristics of the present invention. Therefore, it should be understood that the embodiments described above are illustrative in all aspects and should not be construed as limiting the scope of the present invention.

Provided are a breathable waterproof membrane 100 capable of being thermally-bonded to a fabric by using a hot melt adhesive that is dot-coated on the surface thereof, and a method of manufacturing the same. In particular, the present invention relates to a breathable waterproof membrane 100 capable of being thermally-bonded to a fabric and a method of manufacturing the same, the membrane 100 being applied to the manufacture of outdoor clothing, thereby giving excellent breathability and waterproof properties to the outdoor clothing and simplifying a manufacturing process of the outdoor clothing.

## Claims

1. A thermally-bondable, breathable waterproof membrane (100) for preparing a breathable waterproof fabric, the membrane (100) being thermally-bonded to a fabric substrate (15) and comprising:
a membrane layer (50), wherein a thickness of the membrane layer (50) is in a range of 0.15 mm to 0.30 mm;
a release layer (70) on a first side of the membrane layer (50);
a base layer (25) which is transferred in the form of dots on a second side of the membrane layer (50), wherein the first side and the second side of the membrane layer (50) are opposite to each other; and
a hot-melt adhesive layer (30) formed in the form of dots on the base layer (25),
wherein the base layer (25) and the hot-melt adhesive layer (30) are attached to each other to form a double dot layer (60).

2. The thermally-bondable, breathable waterproof membrane (100) of claim 1, wherein a protective layer (10) is provided on the membrane layer (50).

3. The thermally-bondable, breathable waterproof membrane (100) of claim 1, wherein the hot-melt adhesive layer (30) is formed of one selected from a polyamide-based resin, a polyurethane-based resin, an ethylene vinyl acetate (EVA) resin, and a polyester-based resin.

4. The thermally-bondable, breathable waterproof membrane (100) of claim 1, wherein the base layer (25) is formed of one selected from an acryl-based resin, a polyurethane-based resin, a polyamide-based resin, a polyester-based resin, a polyolefin-based resin, a polyvinyl chloride (PVC) resin, and an ethylene vinyl acetate (EVA) resin.

5. The thermally-bondable, breathable waterproof membrane (100) of claim 1, wherein the membrane layer (50) is formed of one selected from a polyurethane, a polyester, a polyamide, and polytetrafluoroethylene.

6. The thermally-bondable, breathable waterproof membrane (100) of claim 1, wherein the base layer (25) is transferred in the form of dots at a density of 1 dot/cm² to 220 dots/cm² on the membrane layer (50).

7. A breathable waterproof fabric comprising:
a fabric substrate (15); and
a thermally-bondable, breathable waterproof membrane (100) of any one of claims 1 to 6, thermally-bonded to one side of the fabric substrate (15).

8. A method of preparing a thermally-bondable, breathable waterproof membrane (100) according to any one of claims 1 to 6 for preparing a breathable waterproof fabric, the method comprising:
a first step of preparing a membrane layer (50) with a release layer (70) formed on a first side of the membrane layer (50);
a second step of transferring a base layer (25) in the form of dots on a second side of the membrane layer (50), wherein the first side and the second side of the membrane layer (50) are opposite to each other;
a third step of scattering hot-melt adhesive powders (35) on the base layer (25);
a fourth step of removing by suction the hot-melt adhesive powders (35) other than the hot-melt adhesive powders (35) settled on the base layer (25);
a fifth step of heat-fixing the hot-melt adhesive powders (35) settled on the base layer (25) to form a hot-melt adhesive layer (30) in the form of dots; and
a sixth step of cooling the base layer (25) and the hot-melt adhesive layer (30).

9. The method of preparing a thermally-bondable, breathable waterproof membrane (100) for preparing a breathable waterproof fabric of claim 8, further comprising adding a protective layer (10) on the membrane layer (50).

## Patentansprüche

1. Thermisch verbindbare, atmungsaktive, wasserdichte Membran (100) zur Herstellung eines atmungsaktiven, wasserdichten Gewebes, wobei die Membran (100) thermisch mit einem Gewebesubstrat (15) verbunden ist und umfasst:
eine Membranschicht (50), wobei eine Dicke der Membranschicht (50) in einem Bereich von 0,15 mm bis 0,30 mm ist;
eine Trennschicht (70) auf einer ersten Seite der Membranschicht (50);
eine Basisschicht (25), die in der Form von Punkten auf eine zweite Seite der Membranschicht (50) transferiert ist, wobei die erste Seite und die zweite Seite der Membranschicht (50) einander gegenüberliegen; und
eine Schmelzklebstoffschicht (30), die in der Form von Punkten auf der Basisschicht (25) ausgebildet ist,
wobei die Basisschicht (25) und die Schmelzklebstoffschicht (30) aneinander befestigt sind, um eine Doppelpunktschicht (60) zu bilden.

2. Thermisch verbindbare, atmungsaktive, wasserdichte Membran (100) nach Anspruch 1, wobei eine Schutzschicht (10) auf der Membranschicht (50) bereitgestellt ist.

3. Thermisch verbindbare, atmungsaktive, wasserdichte Membran (100) nach Anspruch 1, wobei die Schmelzklebstoffschicht (30) aus einem Harz, ausgewählt aus einem Harz auf Polyamidbasis, einem Harz auf Polyurethanbasis, einem Ethylenvinylacetatharz (EVA) und einem Harz auf Polyesterbasis, gebildet ist.

4. Thermisch verbindbare, atmungsaktive, wasserdichte Membran (100) nach Anspruch 1, wobei die Basisschicht (25) aus einem Harz, ausgewählt aus einem Harz auf Acrylbasis, einem Harz auf Polyurethanbasis, einem Harz auf Polyamidbasis, einem Harz auf Polyesterbasis, einem Harz auf Polyolefinbasis, einem Polyvinylchlorid (PVC)-Harz und einem Ethylenvinylacetat (EVA)-Harz, gebildet ist.

5. Thermisch verbindbare, atmungsaktive, wasserdichte Membran (100) nach Anspruch 1, wobei die Membranschicht (50) aus einem ausgewählt aus einem Polyurethan, einem Polyester, einem Polyamid und Polytetrafluorethylen gebildet ist.

6. Thermisch verbindbare, atmungsaktive, wasserdichte Membran (100) nach Anspruch 1, wobei die Basisschicht (25) in der Form von Punkten mit einer Dichte von 1 Punkt/cm² bis 220 Punkte/cm² auf die Membranschicht (50) transferiert wird.

7. Atmungsaktives, wasserdichtes Gewebe, umfassend:
ein Gewebesubstrat (15); und
eine thermisch verbindbare, atmungsaktive, wasserdichte Membran (100) nach einem der Ansprüche 1 bis 6, die auf einer Seite des Gewebesubstrats (15) thermisch verbunden ist.

8. Verfahren zur Herstellung einer thermisch verbindbaren, atmungsaktiven, wasserdichten Membran (100) nach einem der Ansprüche 1 bis 6 zur Herstellung eines atmungsaktiven, wasserdichten Gewebes, wobei das Verfahren umfasst:
einen ersten Schritt der Herstellung einer Membranschicht (50) mit einer Trennschicht (70), die auf einer ersten Seite der Membranschicht (50) ausgebildet ist;
einen zweiten Schritt des Transferierens einer Basisschicht (25) in der Form von Punkten auf eine zweite Seite der Membranschicht (50), wobei die erste Seite und die zweite Seite der Membranschicht (50) einander gegenüberliegen;
einen dritten Schritt des Aufstreuens von Schmelzklebstoffpulvern (35) auf die Basisschicht (25);
einen vierten Schritt des Entfernens mittels Absaugen der Schmelzklebstoffpulver (35), die sich nicht auf der Basisschicht (25) abgesetzt haben;
einen fünften Schritt des Wärmefixierens der Schmelzklebstoffpulver (35), die sich auf der Basisschicht (25) abgesetzt haben, um eine Schmelzklebstoffschicht (30) in der Form von Punkten zu bilden; und
einen sechsten Schritt des Abkühlens der Basisschicht (25) und der Schmelzklebstoffschicht (30).

9. Verfahren zur Herstellung einer thermisch verbindbaren, atmungsaktiven, wasserdichten Membran (100) zur Herstellung eines atmungsaktiven, wasserdichten Gewebes nach Anspruch 8, ferner umfassend Hinzufügen einer Schutzschicht (10) auf der Membranschicht (50).

## Revendications

1. Membrane imperméable à l'eau et respirante pouvant être thermocollée (100) pour préparer un tissu imperméable à l'eau et respirant, la membrane (100) étant thermocollée sur un substrat de tissu (15) et comprenant :
une couche de membrane (50), dans laquelle une épaisseur de la couche de membrane (50) est dans une plage de 0,15 mm à 0,30 mm ;
une couche de libération (70) sur un premier côté de la couche de membrane (50) ;
une couche de base (25) qui est transférée sous la forme de points sur un second côté de la couche de membrane (50), dans laquelle le premier côté et le second côté de la couche de membrane (50) sont à l'opposé l'un de l'autre ; et
une couche adhésive thermofusible (30) formée sous la forme de points sur la couche de base (25),
dans laquelle la couche de base (25) et la couche adhésive thermofusible (30) sont fixées l'une à l'autre pour former une couche de points double (60).

2. Membrane imperméable à l'eau et respirante pouvant être thermocollée (100) selon la revendication 1, dans laquelle une couche protectrice (10) est prévue sur la couche de membrane (50).

3. Membrane imperméable à l'eau et respirante pouvant être thermocollée (100) selon la revendication 1, dans laquelle la couche adhésive thermofusible (30) est formée de l'une sélectionnée parmi une résine à base de polyamide, une résine à base de polyuréthane, une résine d'éthylène acétate de vinyle (EVA), et une résine à base de polyester.

4. Membrane imperméable à l'eau et respirante pouvant être thermocollée (100) selon la revendication 1, dans laquelle la couche de base (25) est formée de l'une sélectionnée parmi une résine à base d'acryle, une résine à base de polyuréthane, une résine à base de polyamide, une résine à base de polyester, une résine à base de polyoléfine, une résine de polychlorure de vinyle (PVC), et une résine d'éthylène acétate de vinyle (EVA).

5. Membrane imperméable à l'eau et respirante pouvant être thermocollée (100) selon la revendication 1, dans laquelle la couche de membrane (50) est formée de l'un sélectionné parmi un polyuréthane, un polyester, un polyamide et un polytétrafluoroéthylène.

6. Membrane imperméable à l'eau et respirante pouvant être thermocollée (100) selon la revendication 1, dans laquelle la couche de base (25) est transférée sous la forme de points à une densité de 1 point/cm² à 220 points/cm² sur la couche de membrane (50).

7. Tissu imperméable à l'eau et respirant comprenant :
un substrat de tissu (15) ; et
une membrane imperméable à l'eau et respirante pouvant être thermocollée (100) selon l'une quelconque des revendications 1 à 6, thermocollée sur un côté du substrat de tissu (15).

8. Procédé de préparation d'une membrane imperméable à l'eau et respirante pouvant être thermocollée (100) selon l'une quelconque des revendications 1 à 6 pour préparer un tissu imperméable à l'eau et respirant, le procédé comprenant :
une première étape de préparation d'une couche de membrane (50) avec une couche de libération (70) formée sur un premier côté de la couche de membrane (50) ;
une deuxième étape de transfert d'une couche de base (25) sous la forme de points sur un second côté de la couche de membrane (50), dans lequel le premier côté et le second côté de la couche de membrane (50) sont à l'opposé l'un de l'autre ;
une troisième étape de dispersion de poudres adhésives thermofusibles (35) sur la couche de base (25) ;
une quatrième étape de retrait par aspiration des poudres adhésives thermofusibles (35) autres que les poudres adhésives thermofusibles (35) déposées sur la couche de base (25) ;
une cinquième étape de fixation thermique des poudres adhésives thermofusibles (35) déposées sur la couche de base (25) pour former une couche adhésive thermofusible (30) sous la forme de points ; et
une sixième étape de refroidissement de la couche de base (25) et de la couche adhésive thermofusible (30).

9. Procédé de préparation d'une membrane imperméable à l'eau et respirante pouvant être thermocollée (100) pour préparer un tissu imperméable à l'eau et respirant selon la revendication 8, comprenant en outre l'ajout d'une couche protectrice (10) sur la couche de membrane (50).
